# EUROPEAN PATENT APPLICATION

(11) **EP 1 666 952 A1**
(43) Date of publication of application: **07.06.2006**
(21) Application number: 04703139.8
(22) Date of filing: 19.01.2004
(51) Int. Cl.: G02C 5/22

(54) **ELASTIC HINGE OF THE SPECTACLE FRAME AND MANUFACTURING METHOD THEREOF**

(30) Priority: 10.09.2003 CN 03159016
(71) Applicant: Huang, Chen Cai, Longgang District, Shenzhen Guangdong 518000 (CN)
(72) Inventor: Huang, Chen Cai, Longgang District, Shenzhen Guangdong 518000 (CN)
(74) Representative: Viering, Hans-Martin
(86) International application number: PCT/CN2004/000071
(87) International publication number: WO 2005/024495

(57) **Abstract**

A kind of resilient hinge for spectacle frames and a method of manufacturing same. Said resilient hinge includes at least an axis as well as a positioning guide, a resilient medium and a stopper, which are fitted over and through the axis in the aforesaid order. The spectacle frame front and temple can be correspondingly closed and opened conveniently and smoothly through the resilience generated by the resilient hinges provided between the spectacle frame front and the temple. The positioning guide is thus designer to maintain the stability of this process. Said method should at least include the following steps: to make the axis into its basic form from a metal sheet; to reduce the diameter size of the end portion of the said axis bearing the basic form and process it into a cylindrical shape with a specified diameter; a hole is provided at the top end of the axis to form a hinge hole. The axis formed will have a high level of brightness without any traces of pressing marks on its surface, the smooth stretching out and bouncing back of the spring is guaranteed. The density of metal molecule is uniform, free from stress concentration. This enhances the hardness, rigidity and stability of the axis. The entire length of the axis can be controlled freely according to structural requirements.

## Description

### FIELD OF THE INVENTION

This invention relates to a kind of component part for spectacle frames and its manufacturing method, especially a kind of resilient hinge used for spectacle frames and a method of manufacturing same.

### BACKGROUND OF THE INVENTION

It is well known that spectacles are an indispensable article in our daily life. The requirements for spectacles have become higher and higher as with technological advancements. For this reason, manufacturers and designers of spectacles keep improving each and every component part of spectacles making them more comfortable and convenient to wear. According to the current state of the art, the foldable part of spectacle frames, i.e. the connecting device connecting the spectacle frame front and the temple mostly is resilient hinge of different sorts.

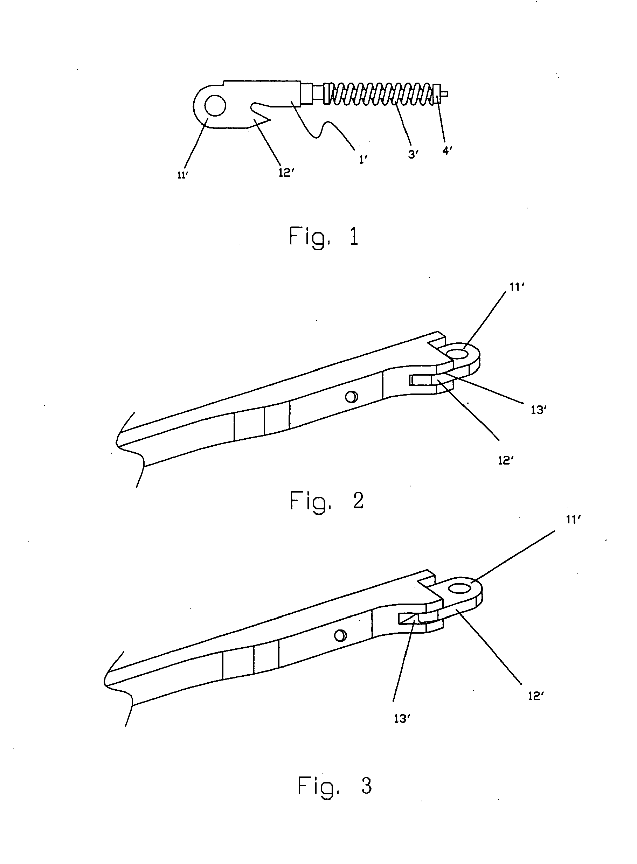

The resilient hinge used in prior art spectacle frames, as shown in Figure 1, consists of an axis 1', a spring 3' and a stopper 4'. At the top end of the axis 1' there is a male hinge 11' that corresponds to the female hinge provided on the spectacle frame (not shown in the figure) and connects the frame hinge with an extending hook means 12'. The rear portion of the axis 1' is assembled with spring 3' and stopper 4' for further sealing assembly with the corresponding receptacles of the spectacle frame.

As shown in Figure 2 and 3, there is a positioning slot 13' that runs through the hole wall provided on the outward end of the receptacle in the spectacle frame which is corresponding to the position of the hook structure 12'. The hook structure 12' of the axis 1' is positioned in positioning slot 13' and matches said receptacle in both structure and size. This restricts the up and down movements of the axis of the resilient hinge with respect to the spectacle frame. However, the restriction of movement in only one direction still cannot effectively guarantee that the axis will not make any uncertain movements under the action of uncertain external forces. That is to say, the axis of resilient hinge will move uncertainly and thus cause damage easily due to the action of external forces generated during manufacture, transportation or usage.

Current resilient hinges for spectacle frames are shaped by punch forming. This method always leaves pressure marks and rough edges on the outside surface of the axis, and thus the spring that is assembled over it cannot work smoothly. Moreover, the stability, life and eligibility rate of the product would all drop due to stress concentration caused by the punching.

To sum up, spectacle frame resilient hinges manufactured under the existing technology and the manufacturing method are obviously inconvenient and flawed during use. There is therefore a need for improvement.

### SUMMARY OF THE INVENTION

The aim of this invention is to provide a kind of novel, rational and easy-to-implement positioning guided structured resilient connecting hinge for spectacle frames that uses a, manufacturing method of diameter-reducing technique.

Below is a technical proposal for this invention, which is designed to achieve the above purpose:

A resilient hinge for spectacle frames includes an axis and a positioning guide, a resilient medium and a stopper, which are fitted over and through the axis in the aforesaid order. The head end of said axis is a male hinge structure that can be connected to a female hinge provided on the spectacle frame. The middle part of said axis is a pillar having a comparatively smaller cross sectional area with at least one side having a flat surface. The rear portion of said axis is a pillar with the smallest cross sectional area. Said positioning guide is provided with a positioning hole which corresponds to the pillar in the middle part of the axis. The positioning guide is fitted over the pillar in the middle of the axis through the positioning hole thereof and abuts against the male hinge structure of the head end of the axis and the female hinge on the spectacle frame. The resilient medium and stopper, in same order, are fitted over and through to the rear pillar of the axis. The middle and rear pillars of said axis along with the positioning guide, resilient medium and stopper are all sealingly assembled in a receptacle in the spectacle frame.

In a preferred embodiment of the present invention, the rear pillar of the axis of said resilient hinge of spectacle frame is circular, obtained by diameter-reducing machine through pressing and stretching.

For said resilient hinge of spectacle frame, the cross section of the pillar in the middle of the axis is a polygon.

For said resilient hinge of spectacle frame, the pillar in the middle of the axis with a polygonal cross section is a polygon with 3-8 sides.

For said resilient hinge of spectacle frame, the cross sections of the middle pillar of the axis and the positioning hole of the positioning guide are square or rectangular.

For said resilient hinge of spectacle frame, the cross sections of the middle pillar of the axis and the positioning hole of the positioning guide have a shape of a kidney or a crisscross or a semi-circle.

For said resilient hinge of spectacle frame, a hook structure extends outwardly from the male hinge structure at the head end of the axis. A positioning slot which runs through the hole wall is provided at the outer end of the receptacle in the spectacle frame at a position corresponding to the hook structure. The hook structure on the head end of the axis is positioned in the positioning slot, and matches the said receptacle in both structure and size.

There are 2 assembling structures of resilient hinge in spectacle frames:

In a first embodiment, the female hinge is provided on the spectacle frame front; the middle and rear pillars of the axis along with the positioning guide, resilient medium and stopper are all sealingly assembled in the receptacle provide in the temple; at least one depression point or screw or pin is made to the temple in a position corresponding to the positioning hole or the positioning neck slot provided on the positioning guide so that the positioning guide is engaged. The male hinge structure of said axis and be connected movably to the female hinge on the spectacle frame front.

In a second embodiment, said female hinge is provided on the temple; the middle and rear pillars of the axis along with the positioning guide, resilient medium and stopper are all sealingly assembled in the receptacle provided on the spectacle frame front; at least one depression point or screw or pin is made to the spectacle frame front in a position corresponding to the positioning hole or positioning neck slot provided on the positioning guide so that the positioning guide is engaged. The male hinge structure of said axis can be connected movably to the female hinge on the temple.

In said.resilient hinge of spectacle frame, a positioning hole or positioning neck slot is provided on the side surface of the positioning guide.

In said resilient hinge of spectacle frame, a plate is provided at the end of the positioning guide close to the edge of the male hinge structure of the axis.

In said resilient hinge of spectacle frame, a hook structure extends outwardly from the male hinge structure at the head end of its axis. A positioning slot running through the hole wall is provided at the outer end of the receptacle of the spectacle frame which corresponds to said hook structure. A through slot is provided on the plate in a position which corresponds to the hook structure and the positioning slot on the spectacle frame. The hook structure on the head end of said axis is positioned in the positioning slot and the through slot, and matches the receptacle in both structure and size.

In said resilient hinge of spectacle frame, there is a guiding chamfer on the external rim of the plate.

In said resilient hinge of spectacle frame, the receptacle on the spectacle frame extends outwardly to form an accommodating slot corresponding to the plate. The plate fits well in the accommodating slot.

In said resilient hinge of spectacle frame, a stopper is installed and fastened on the outside end portion of the rear pillar of the axis, alternatively, the outside end portion of the rear pillar of the axis is hammered flat to serve as a stopper, so that the resilient medium can be positioned on the rear pillar of the axis.

With regard to the resilient hinge of the spectacle frame, the resilient medium is a compression spring.

By adopted the above-mentioned structure, the middle pillar of the axis fits into the positioning hole of the positioning guide. This can restrict the random movement or rotation of the axis under the action of random and uncertain external forces thus avoiding unnecessary damage being made to the structure of the spectacle frame. At the same time, it ensures that the axis moves in only one direction which is controlled by the positioning hole on the positioning guide, i.e. axial movement, under the action of external forces or under the action of resilient force after external forces have vanished. In other words, the structure also has a guiding function. Hence, the stability of the specified motion of the hinge can be guaranteed.

To sum up, said resilient hinge features simple and rational structure, good working stability and high quality. The spectacle frame front and temple can be correspondingly closed and opened conveniently and smoothly through the resilience generated by the resilient hinges provided between the spectacle frame front and the temple. The middle pillar of the axis and the positioning guide are thus designed to maintain the stability of this process. This makes the spectacles comfortable to wear.

The manufacturing method for a resilient hinge of spectacle frames involves at least the following steps:

Primary shaping steps: process from a metal sheet a head end of an axis that is the male hinge structure, a middle part of a square pillar with a smaller cross-sectional area, and a rear part also of a square pillar.

Diameter reducing steps: the basically formed square pillar at the rear portion of the axis is processed into a circular pillar at a specified diameter length by a diameter reducing method of simultaneous compressing and stretching.

Processing of hinge hole: the head end of the axis is processed to form a hinge hole.

In the manufacturing method of the resilient hinge of spectacle frame described in a preferred embodiment of the present invention, the primary shaping step involves the cutting out of an axis in a primary shape from a metal sheet.

In the manufacturing method of said resilient hinge of spectacle frame, an axis with a primary shape is cut out from the metal sheet by an NC EDM wire-cut machine in the primary shaping step.

In the manufacturing method of said resilient hinge of spectacle frame, a process through which a common metal sheet is manufactured into one that meets the specifications required by an NC EDM wire-cut machine is also included.

In the manufacturing method of said resilient hinge of spectacle frame, a process through which the middle pillar of the axis is shaped is also included.

In the manufacturing method of said resilient hinge of spectacle frame, the middle pillar of the axis is shaped by compressing or cutting or by other commonly known shaping methods.

In the diameter reducing step of the said manufacturing method of said resilient hinge of spectacle frame, a diameter-reducing machine is used to compress or stretch the rear pillar of the axis into a circular pillar with specified diameter.

Said manufacturing method of said resilient hinge of spectacle frame also includes a process to cut off the redundant portion exceeding the desired length of the rear circular pillar of the axis produced in the diameter-reducing process.

In the hole-forming step of the manufacturing method of said resilient hinge of spectacle frame, drilling machine, punching machine or milling machine is used to drill out, punch through or mill a hinge hole on the male hinge structure of the head of the axis.

In the manufacturing method of said resilient hinge of spectacle frame, the axis is of metallic material such as titanium, titanium alloy, copper, copper alloy, stainless steel, iron or ferroalloy, etc.

The manufacturing method of said resilient hinge of spectacle frame also includes the process in which the positioning guide, resilient medium and stopper and fitted over the middle through to the rear pillar in the same order and well positioned.

By adopting the above-mentioned method, the axis will have a high level of brightness without any traces of pressing marks on its surface by using a diameter-reducing machine to manufacture the rear circular pillar of the axis and the smooth stretching out and bouncing back of the spring is guaranteed. The density of metal molecule is uniform, free from stress concentration. This enhances the hardness, rigidity and stability of the axis.

The entire length of the axis can be controlled to meet structural requirements. That is to say, the entire length of the axis which is also the entire length of the resilient hinge, can be made very short. Thus, the structure on the joints of spectacle frames can be made more compact and handy. Spectacles produced by this method are more comfortable and materials can be saved.

In addition, since NC EDM wire-cut machine is used to process axis, it is noteworthy that as compared with commonly used stamping methods, there is hardly any distortion on the axis through processing by NC EDM wire-cut machine. Meanwhile, the position for cutting can be properly selected so as to save as much materials as possible.

### BRIEF DESCRIPTION OF THE DRAWINGS

Fig. 1 is a schematic drawing of a prior art resilient hinge of spectacle frame.
Fig. 2 shows a prior art resilient hinge of spectacle frame assembled in spectacle frame with the head end of axis exposed.
Fig. 3 shows a prior art resilient hinge of spectacle frame assembled in spectacle frame with the head end of axis exposed and being pulled out.
Fig. 4 is a schematic drawing according to the first embodiment of the present invention.
Fig. 5 is an exploded view in which the resilient hinge shown in Fig. 4 is being assembled in the spectacle frame.
Fig. 6 shows the perspective view of the positioning guide shown in Fig. 4.
Fig. 7 is and exploded view of the second embodiment of the present invention.
Fig. 8 shows an exploded view of the third embodiment of the present invention.
Fig. 9 shows an exploded view of the fourth embodiment of the present invention.
Fig. 10 shows an exploded view of the fifth embodiment of the present invention.
Fig. 11 shows an exploded view of the sixth embodiment of the present invention.
Fig. 12 shows an exploded view of the seventh embodiment of the present invention.
Fig. 13 shows an exploded view of the eighth embodiment of the present invention.
Fig. 14 shows an exploded view of the ninth embodiment of the present invention.
Fig. 15 shows an exploded view of the tenth embodiment of the present invention.
Fig. 16 is a partial sectional view of one embodiment of said resilient hinge assembled in spectacle frame in the present invention.
Fig. 17 shows and enlarged view of Part A in Fig. 16.
Fig. 18 shows a partial sectional view of another embodiment of said resilient hinge assembled in spectacle frame in the present invention.
Fig. 19 shows and enlarged view of Part B in Fig. 18.
Fig. 20 is perspective view of the positioning guide with a plate and a positioning neck slot of the present invention.
Fig. 21 is a perspective view of the positioning guide with a plate and a positioning hole of the present invention.
Fig. 22 shows and exploded view of a resilient hinge according to the present invention, in which a positioning guide is provided with a plate with guiding chamfer and a corresponding positioning slot is provided in the spectacle frame.
Fig. 23 shows an exploded view of a resilient hinge according to the present invention, in which the head end of an axis is provided with a hook structure and a positioning guide is provided with a plate with a corresponding through slot.
Fig. 24 is a schematic drawing of the axis which is cut and processed into its fundamental shape through method described in the present invention.
Fig. 25 shows a schematic drawing of a rear circular pillar of the axis processed by diameter-reducing method according to the present invention.
Fig. 26 is a schematic view of a hole being drilled into a resilient hinge in a method according to the present invention.

### DESCRIPTION OF THE PREFERRED EMBODIMENT

Below is further explanation on the present invention with reference to the attached drawing and embodiments:

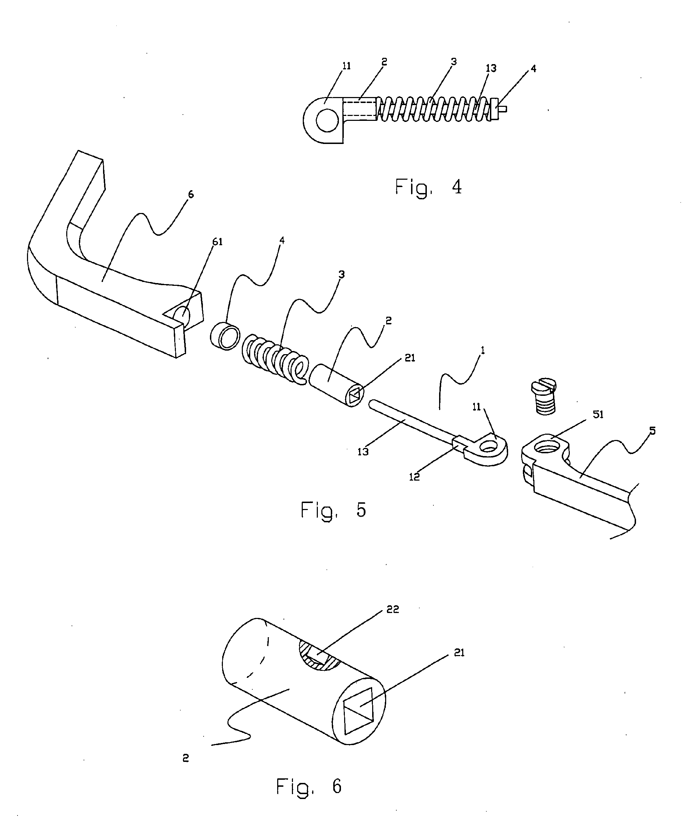

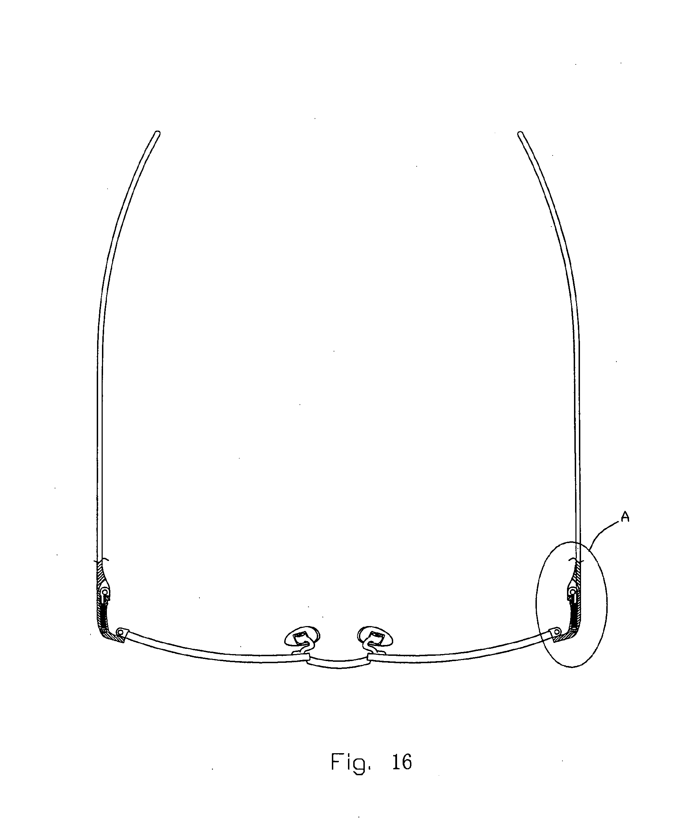

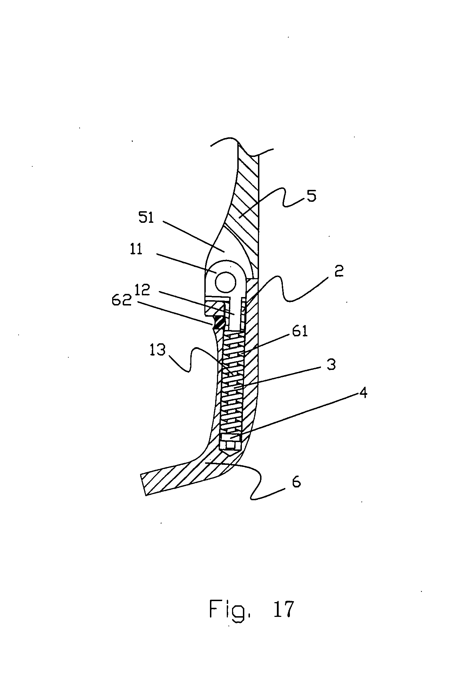

Figures 4-6, 16 and 17 show a kind of resilient hinge of spectacle frame, including an axis 1, a positioning guide 2, a spring 3 and a stopper 4. At the head end of axis 1 is a male hinge structure 11 for connection to a female hinge 51 assembled in temple 5. The middle portion of axis 1 is a square pillar 12 having a comparatively smaller cross-sectional area than that of male hinge structure 11. The rear portion of axis 1 is a circular pillar 13 having the smallest cross-sectional area. A square positioning hole 21 is provided on positioning guide 2, corresponding to square pillar 12 in the middle part of axis 1. Positioning guide 2 is fitted over the square pillar 12 of the middle part of axis 1 through its square positioning hole 21, abuts against the male hinge structure 11 of axis 1 as well as female hinge 51. Spring 3 the stopper 4 are fitted over circular pillar 13 of the rear of axis 1 in the aforesaid order, the head end of spring 3 abuts against positioning guide 2 and the rear end against stopper 4, and then the rear end of circular pillar 13 can be hammered flat for positioning purpose. Square pillar 12 in the middle of axis 1 and circular pillar 13 at the rear end, along with positioning guide 2, spring 3 and stopper 4 and sealingly assembled in receptacle 61 of spectacle frame front 6. A positioning hole 22 is provided on the outer surface of positioning guide 2, and a depression 62 is made or a screw or pin is applied on the outer surface of spectacle frame front 6 at a position corresponding to positioning hole 22 in positioning guide 2, or alternatively, a depression point is made directly on the outer surface of spectacle frame front 6 corresponding to positioning hole 22 in order to wedge positioning guide 2.

When temple 5 of spectacle frame front 6 is opened, female hinge 51 and male hinge 11 rotate relatively with each other. At the same time, female hinge 51 abuts against positioning guide 2 and spectacle frame front 6 pulls axis 1 out of positioning guide 2, i.e. pulls it out from spectacle frame front 6. After it is opened, axis 1 returns to positioning guide 2 under the resilience action of spring 3. The stability of movement in the aforesaid operation can be guaranteed due to the structural matching of square pillar 12 in the middle of axis 1 with square hole 21 in positioning guide 2.

The process of closing up temple 5 and spectacle frame front 6 is the same as the above.

The structural matching of square pillar 12 in the middle of axis 1 with square hole 21 in positioning guide 2 functions as follows: not only can it restrict axis 1 of resilient hinge from unwanted radial movements (i.e. in any direction in a range of 360°) with respect to the spectacle frame or to rotate relatively with each other, that is to keep the resilient hinge in agreement with spectacle frame, it also guarantees that axis 1 moves only in the direction restricted by square positioning hole 21 under the action of external force or under the resilient force when the external force disappears, that is only in the axial direction. This means that it also plays a guiding role to maintain the stability of the specified movement of the hinge.

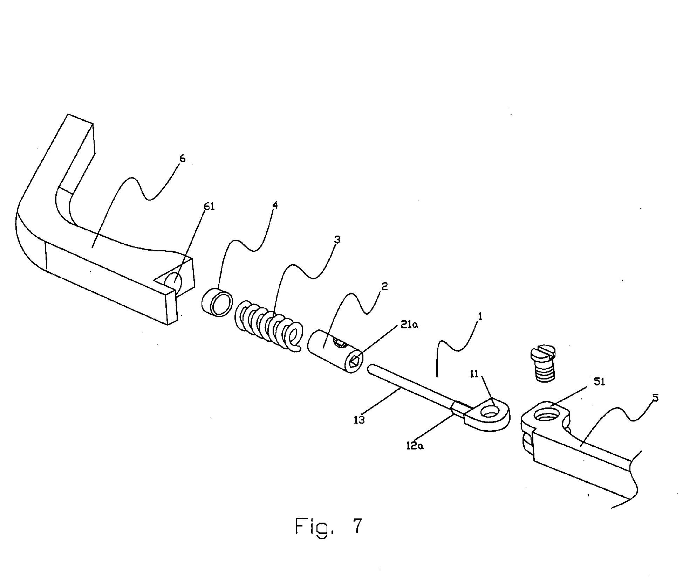

Fig. 7 is a second embodiment of the present invention. The purpose and effect of this invention can be achieved if the cross sections of pillar 12a in the middle of axis 1 and positioning hole 21 a in positioning guide 2 all take the shape of pentagon. The principle is the same as mentioned above.

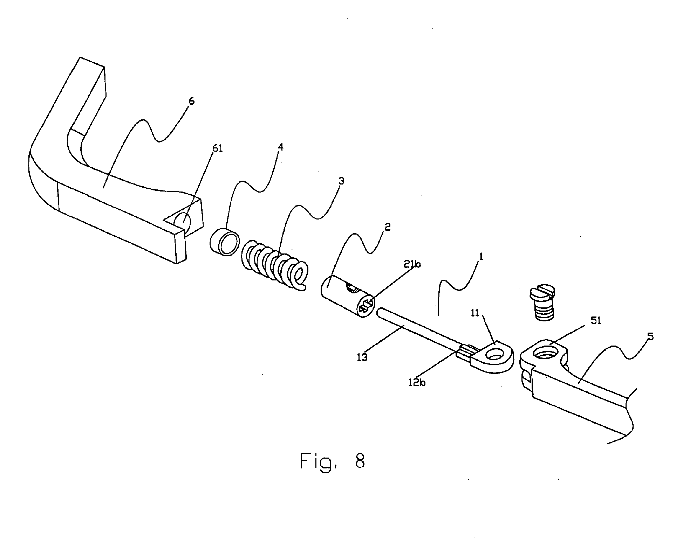

Fig. 8 is a third embodiment of this invention. The purpose and effect of the present invention can be achieved if the cross sections of pillar 12b in the middle of axis 1 and positioning hole 21 b in positioning guide 2 take the shape of crisscross. The principle is the same as mentioned above.

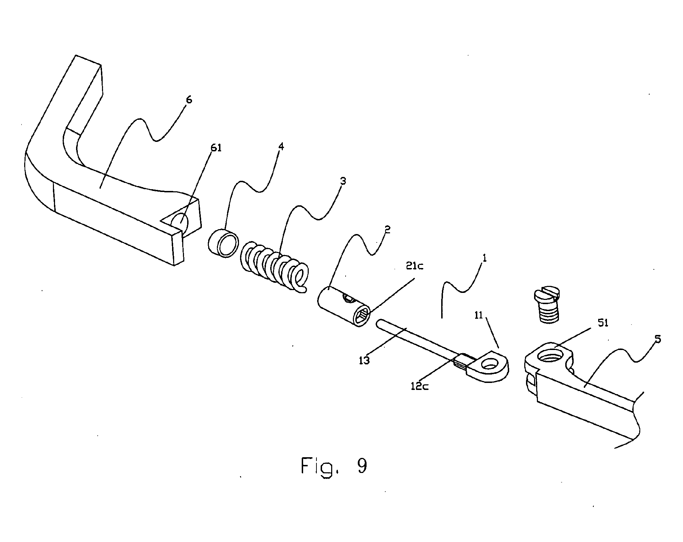

Fig. 9 is a fourth embodiment of this invention. The purpose and effect of the present invention can be achieved if the cross sections of pillar 12c in the middle of axis 1 and the positioning hole 21 c in positioning guide 2 are of a kidney shape. The principle is the same as mentioned above.

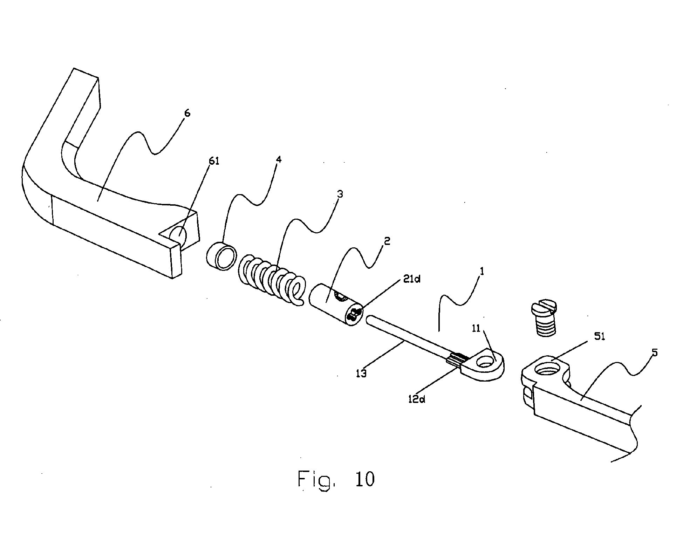

Fig. 10 is a fifth embodiment of this invention. The purpose and effect of the present invention can be achieved if the cross sections of pillar 12d in the middle of the axis 1 and positioning hole 21 d in positioning guide 2 all take the shape of different crisscrosses consisting of eight planes and four curved surfaces. The principle is the same as mentioned above.

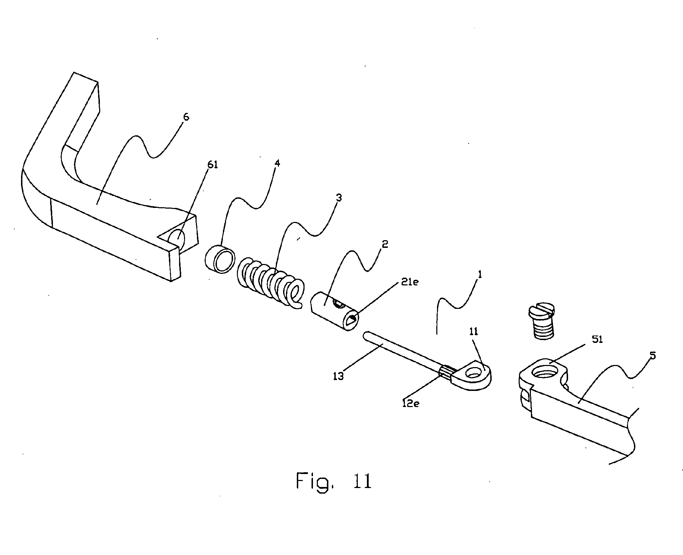

Fig. 11 is a sixth embodiment of this present invention. The purpose and effect of this invention can be achieved if the cross sections of pillar 12e in the middle of axis 1 and positioning hole 21 e in positioning guide 2 bake the shape of semi-circle. The principle is the same as the aforesaid.

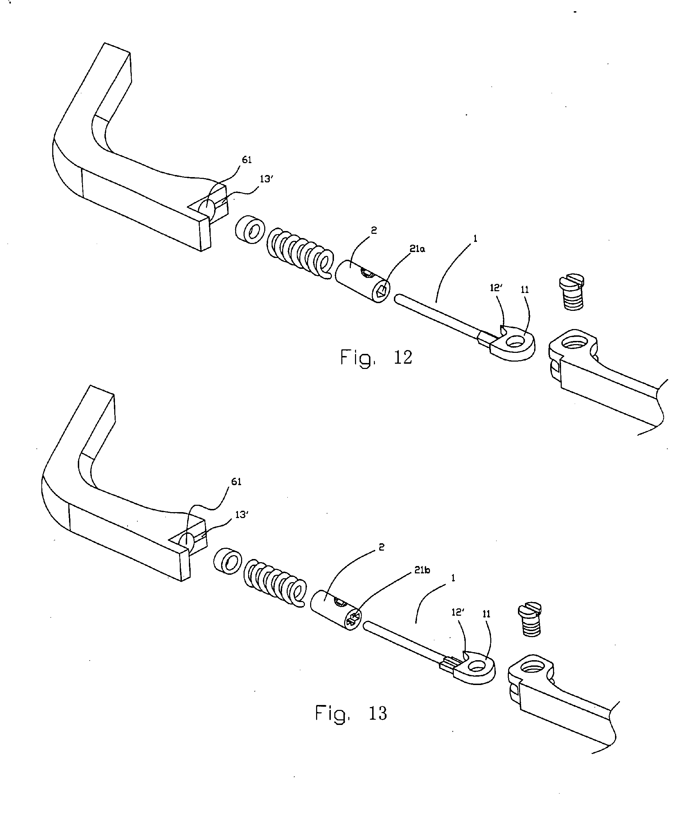

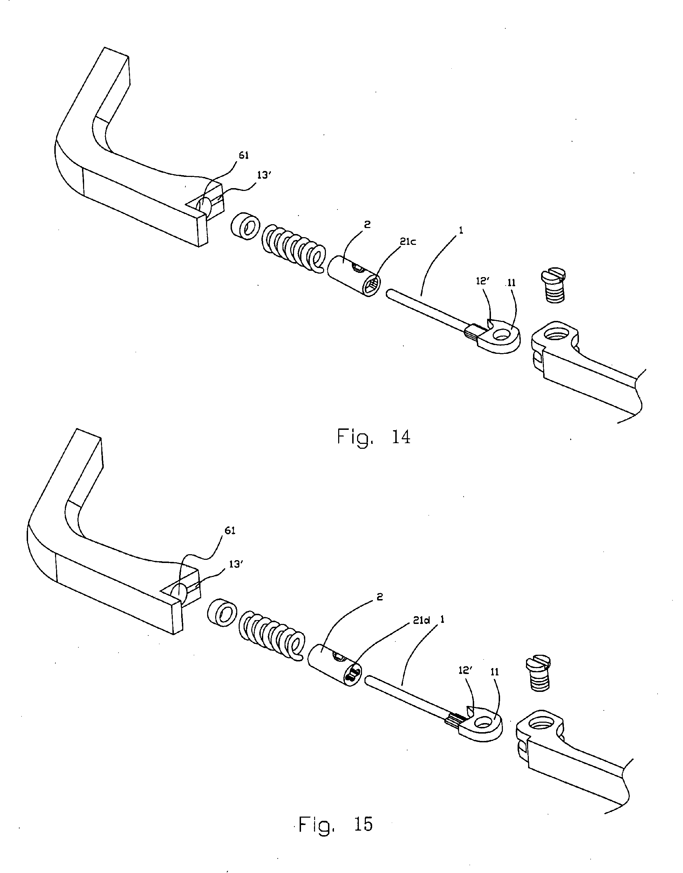

Fig. 12-15 are four other embodiment of this present invention. The male hinge structure 11 provided at the head end of said axis 1 extends outwardly to form a hook structure 12'. A positioning slot 13' which runs through the hole wall is provided at the outer end of receptacle 61 of the spectacle frame corresponding to the hook structure 12'. The hook structure 12' at the head end of said axis is positioned in the positioning slot 13', and they match each other in both structure and size.

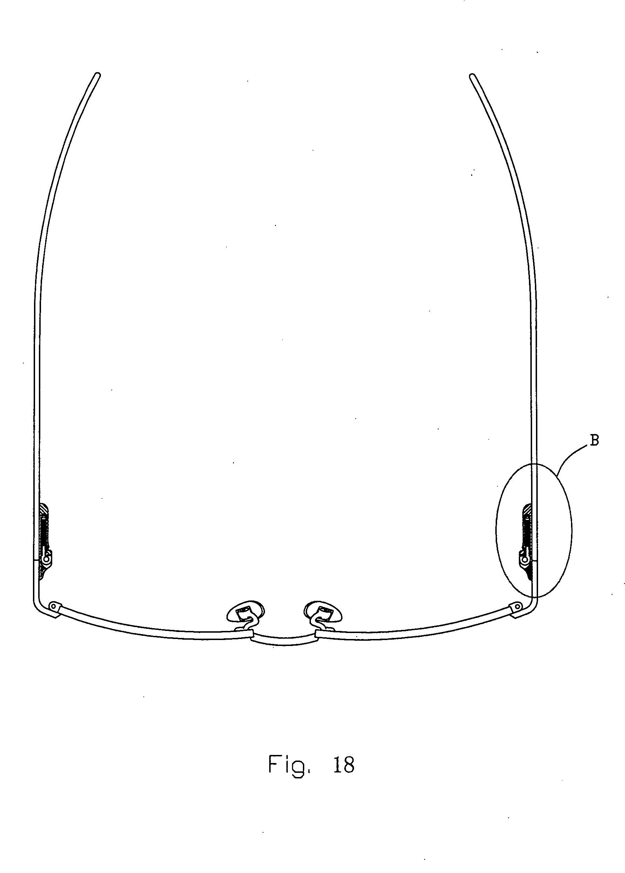

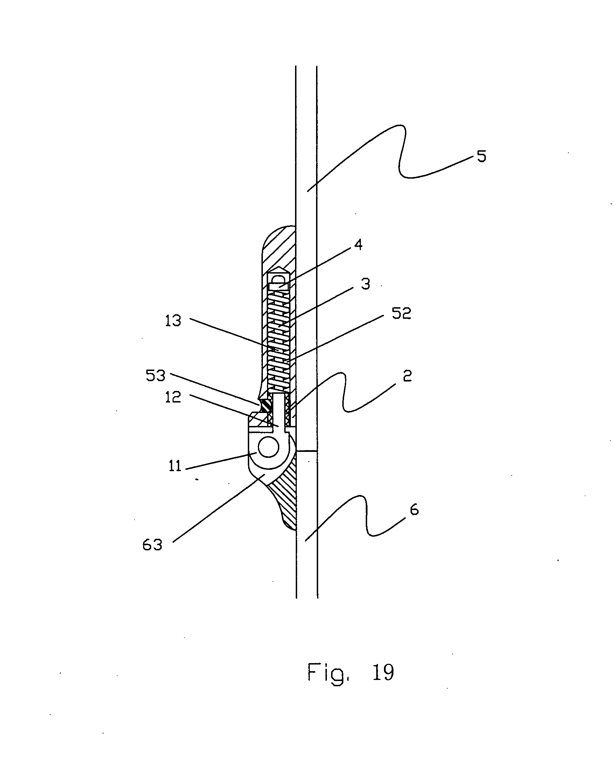

The assembling structure of resilient hinge on spectacle frame can also be that as shown in Fig. 18-19. Female hinge 63 can be assembled in spectacle frame front 6. Square pillar 12 in the middle of axis 1, circular pillar 13 in the rear, along with positioning guide 2, spring 3 and stopper 4, are sealingly assembled in receptacle 52 provided in temple 5. A depression 53 is made, or a screw or a pin is used on the outer surface of temple 5 corresponding to the positioning hole of the positioning guide 2, or a depression is made directly on the outer surface of the temple 5 corresponding to the positioning guide 22 in order to wedge positioning guide 2. The male hinge structure 11 of axis 1 is coupled to the female hinge 63 provided on spectacle frame front 6.

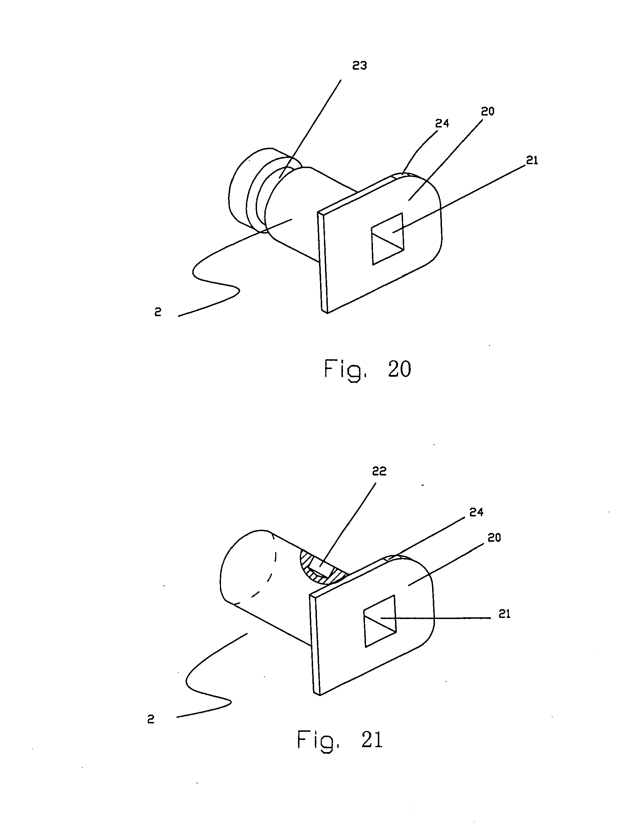

As shown in Fig. 20, a positioning neck slot 23 can also be provided on positioning guide 2. It provides the same function as the above-mentioned positioning hole 22. One or more depression points are made or a screw or a pin is used on the spectacle frame corresponding to the positioning neck slot 23, so as to wedge positioning guide 2.

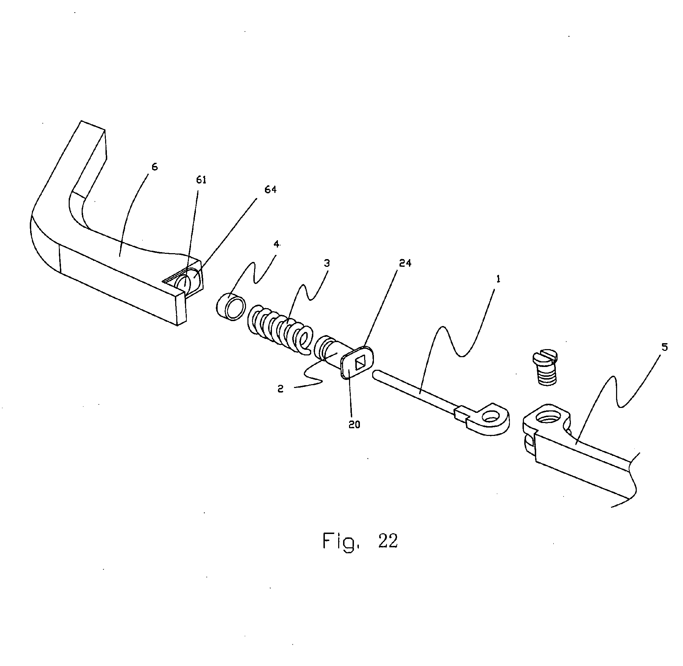

As shown in Fig. 20-22, a plate 20 is provided at the end of the positioning guide 2 close to the end of male hinge structure 11 of axis 1. That is , positioning guide 2 abuts against male hinge structure 11 female hinge through plate 20 the prevent the parts from wearing out during rotation. A guiding chamfer 24 can also be provided on the rim of plate 20. Receptacle 61 in spectacle front 6 (or in temple 5) extends outwardly to form and accommodating slot 64. Plate 20 is fitted into the accommodating slot 64. Thus the plate 20 can be placed inside the accommodating slot 64 in spectacle frame front 6. This does not only provide a more compact and neat structure, but also guarantees its sealingness, preventing contamination by dust.

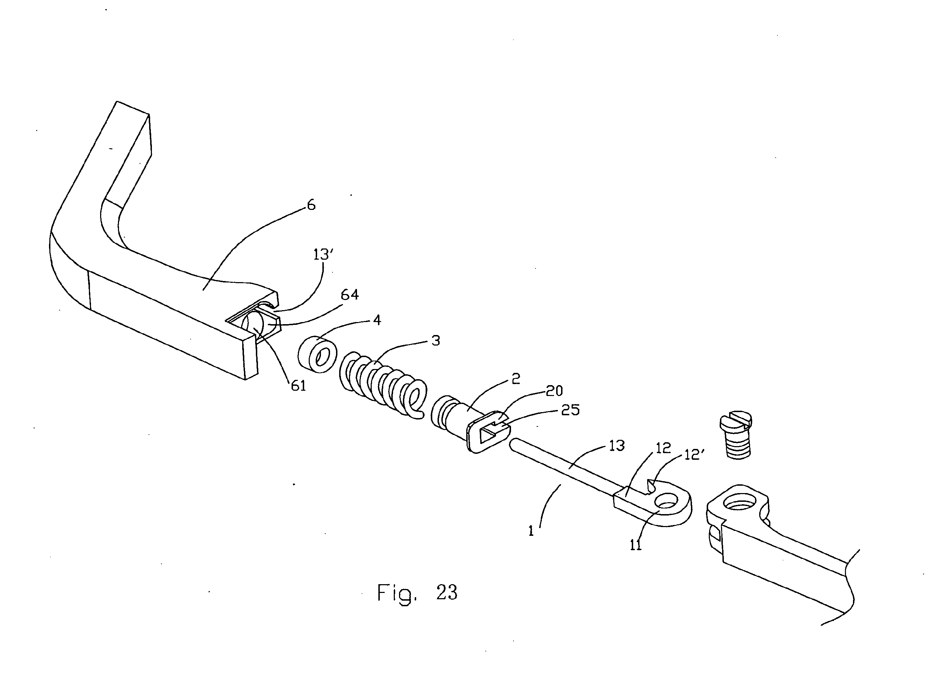

As shown in Fig. 23, corresponding to the hook structure 12' axis 1 provided at the head end 11 of axis 1, a through slot 25 is provided on plate 20 of positioning guide 2 facing the positioning slot (the figure shows the positioning slot 13' on spectacle frame front 6) in the spectacle frame, which can be used to contain and be fitted with the hook structure 12'.

In addition, as shown in Fig. 4, positioning guide 2, spring 3 and stopper 4 and fitted over square pillar 12 in the middle and rear circular pillar 13 of axis 1. Then the end portion of circular pillar 13 is hammered flat acting as a stopper for positioning. Here, we can use a separate stopper, or use the rear end of the circular pillar by hammering it into a flat shape acting as a stopper, or use other commonly known methods to fix spring 3 and/or stopper 4 to the rear circular pillar 13.

The manufacturing method of said resilient hinge described in the first embodiment of the present invention will be introduced below:

By using conventional cutting machines, such as metal sheet cutter, to cut common metal sheet into plate A of designated specifications.

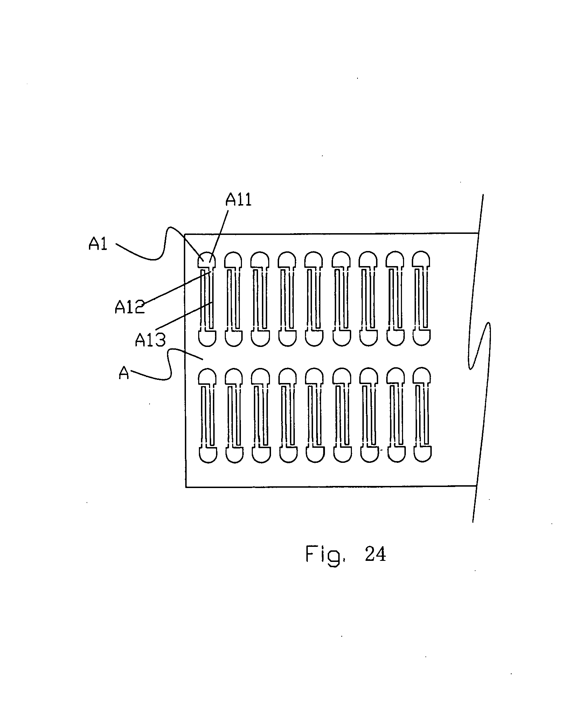

By programming of the NC EDM wire-cut machine, its wire-cutting position can be adjusted as shown in Fig. 24, and then a plurality of metal sheets A are placed on the MC EDM wire-cut machine to cut out axis A1 in a primary shape. NC EDM wire-cut machine can cut a plurality of metal sheets at the same time which enhances efficiency. Male hinge structure A11 at the head end of axis 1 and the middle square pillar A12 are both shaped at the same time, whereas the rear square pillar A13 has yet to be shaped. Axes processed from NC EDM wire-cut machine are practically free from deformation. Meanwhile, the cutting position can be determined properly, so as to save as much materials as possible.

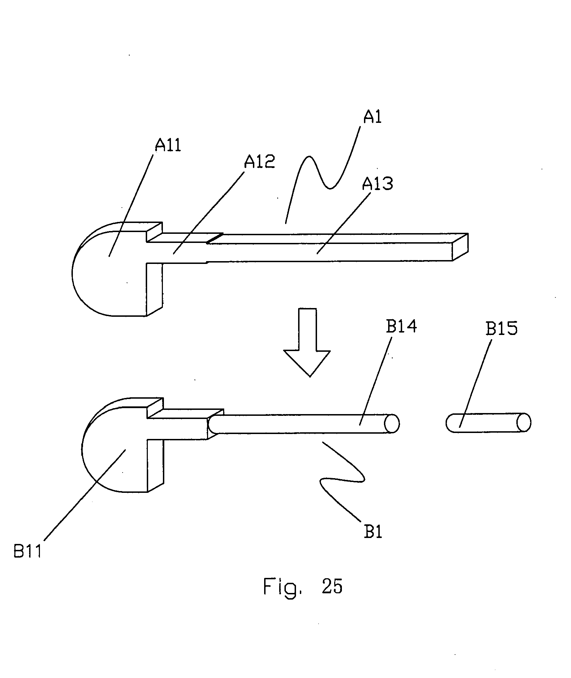

As shown in Fig. 25, we may put the square pillar A13 diameter-reducing machine to compress and stretch it into a circular pillar B14 with a diameter of 0.6 mm, and then cut off the excess length portion B15, according to the desired length. Thus, rear circular pillar B14 of axis B1 is shaped. The rear circular pillar B14 of the axis, which is processed by diameter-reducing machine, will have a high level of brightness without any traces of pressing marks on its surface. The smooth stretching out and bouncing back of the spring is guaranteed. The density of metal molecules of the rear circular pillar B14 is uniform, free from stress concentration. This enhances the hardness, rigidity and stability of the axis. Moreover, the entire length of the axis can be controlled freely according to structural requirements. This means that the entire length of the axis, can be made as short as needed. Thus, providing a more compact and handy structure at joint portion on the spectacle frame. This produces more comfortable spectacles, and saves materials.

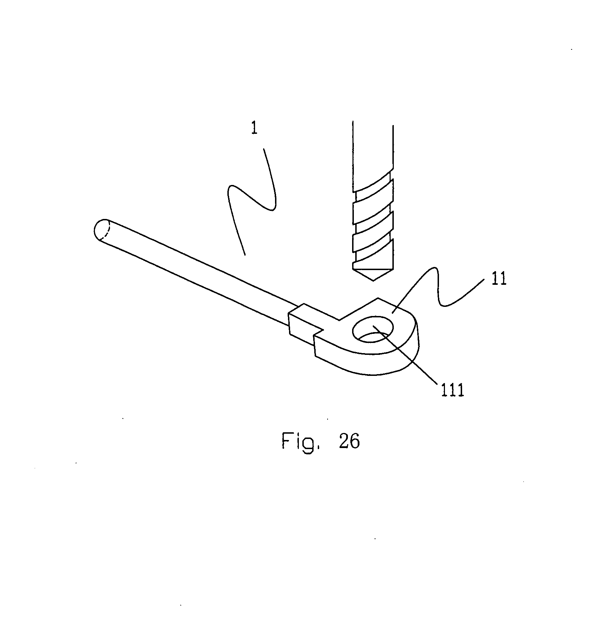

As shown in Fig. 26, a hinge hole 111 can be drilled out of the male hinge B11 at the end of axis B1 with a drilling machine. This allows us to obtain axis 1 in its final shape. Moreover, we can also use a punching machine or a milling machine to punch or mill hinge hole 111 out of male hinge structure B11.

As shown in Fig. 4, the positioning guide 2, spring 3 and stopper 4 can be fitted over square pillar 12 and circular pillar 13 of axis 1 in the aforesaid order either manually or by using machines currently available. Then the rear end of circular pillar 13 is hammered into a flat shape for positioning. Here, we can use a separate stopper, or use the rear end of the circular pillar which is hammered flat to act as a stopper, or adopt other commonly known methods to fix the spring 3 and/or stopper 4 to rear pillar 13. In the above-mentioned process, the cutting off the unwanted excess portion of the rear circular pillar can also cut off at the same time during the hammering flat process by punching machine or any other machines.

As for the manufacturing method through which the cross section of pillar 12 in the middle of axis 1 can be shaped into pentagon, crisscross, kidney shape, semi-circle or other irregular shapes, said manufacturing method also includes a step through which middle pillar 12 punched or pressed or cut into the final shape.

As for the axis with a hook structure 12' at the head end of the male hinge structure 11, it can be manufactured by adjusting the cutting position of wires with NC EDM wire-cut machine.

Based on the technical know-how in the art, the present invention can also be achieved through other methods that do not deviate from its tent or essential features. Therefore, the implementation plans described above are merely illustrative examples and are not in any limited sense. All alterations that fall within the scope of this invention of a scope equivalent to that of this invention are covered by this invention.

## Claims

1. A resilient hinge for spectacle frame, including an axis as well as a positioning guide, a resilient medium and a stopper, which are fitted over the axis in the aforesaid order, the head end of said axis is provided a male hinge structure connected to a female hinge assembled in the spectacle frame, wherein the middle part of the axis is a pillar having a comparatively smaller cross-sectional area with at least one side being a flat surface, the rear portion of said axis is a pillar with the smallest cross-sectional area; said positioning guide is provided with a positioning hole corresponding to the middle pillar of the axis , said positioning guide is fitted over the middle pillar of the axis through the positioning hole and abuts against the male hinge structure of the head end of the axis and the female hinge on the spectacle frame; said resilient medium and stopper are fitted over the rear pillar of the axis in the aforesaid order; the middle and rear pillars of said axis together with the positioning guide, resilient medium and stopper are all sealingly assembled in an accommodating of the spectacle frame.

2. The resilient hinge of the spectacle frame according to claim 1, wherein the rear pillar of said axis is cylindrical, which is manufactured through pressing and stretching by diameter-reducing machine.

3. The resilient hinge of the spectacle frame according to claim 1, wherein the middle pillar of said axis is a pillar with a polygonal cross section.

4. The resilient hinge of the spectacle frame according to claim 3, wherein the middle, pillar of said axis is a pillar with a 8-sided polygonal cross section.

5. The resilient hinge of the spectacle frame according to claim 4, wherein the cross sections of the middle pillar of said axis and the positioning hole in positioning guide are square of rectangular.

6. The resilient hinge of the spectacle frame according to claim 1, wherein the cross sections of the middle pillar of said axis and the positioning hole in positioning guide are in the shape of kidney or crisscross or semi-circle.

7. The resilient hinge of the spectacle frame according to claim 1, wherein on a lateral side of the outer surface of said positioning guide is provided with a positioning hole or positioning neck slot.

8. The resilient hinge of the spectacle frame according to claim 7, wherein the female hinge is provided on the spectacle frame front; the middle and rear pillars of the axis together with the positioning guide, resilient medium and stopper are sealingly assembled in the accommodating receptacle on temple; and at least one depression or screw or pin is made or used in a place on the temple corresponding to the positioning hole or the positioning neck slot in the positioning guide and as a result the positioning guide is wedged; the male hinge structure of said axis is connected movably to the female hinge assembled in the spectacle frame front.

9. The resilient hinge of the spectacle frame according to claim 7, wherein said female hinge is provided on the temple; the middle and rear pillars of said axis together with the positioning guide, resilient medium and stopper are sealingly assembled in the accommodating receptacle in the spectacle frame front; and at least one depression or screw or pin is made or used in a place on the spectacle frame front corresponding to the positioning hole or the positioning neck slot in the positioning guide and as a result the positioning guide is wedged; the male hinge structure of said axis is connected movably to the female hinge assembled in the temple.

10. The resilient hinge of the spectacle frame according to claim 1, wherein the male hinge structure located at the head end of said axis extends outwardly to form a hook structure; a positioning slot that runs through the hole wall is provided in the outer end of accommodating receptacle in the spectacle frame corresponding to where the hook structure is; the hook structure at the head end of the axis is positioned in the positioning slot with their structural sizes matching with each other.

11. The resilient hinge of the spectacle frame according to claim 1, wherein at the end of the positioning guide close to the male hinge structure of the axis is also provided with a plate.

12. The resilient hinge of the spectacle frame according to claim 11,wherein the male hinge structure located at the head end of said axis extends outwardly to form a hook structure; a positioning slot that runs through the hole wall is provided at the outside end of the receptacle in the spectacle frame corresponding to where the hook structure is, a through slot is provided on the plate corresponding to the hook structure and the positioning slot in the spectacle frame, the hook structure at the head end of the axis is positioned in the positioning slot and the through slot with their structural sizes matching with each other.

13. The resilient hinge of the spectacle frame according to claim 11, wherein the rim of the plate is provided with a guiding chamfer.

14. The resilient hinge of the spectacle frame according to claim 11, wherein the accommodating receptacle in the spectacle frame extends outwardly with an accommodating slot corresponding to the plate, said plate suitably fits in the accommodating slot.

15. The resilient hinge of the spectacle frame according to claim 1, wherein a stopper is securely assembled in the outer end portion of rear pillar of said axis or the outer end portion of the rear pillar of the axis is directly hammered into a flat shape as a stopper, so that the resilient medium is positioned on the rear pillar of the axis.

16. The resilient hinge of the spectacle frame according to claim 1, wherein said resilient medium is a compression spring.

17. A manufacturing method for a resilient hinge of spectacle frame, which comprises at least the following steps:
primary shaping step: the axis having a primary shape manufactured from a metal sheet that the head end of the axis is a male hinge structure, the middle part is a square pillar with a comparatively smaller cross-sectional area and the rear part is a square pillar;
diameter-reducing: processing the rear square pillar of the axis having the primary shape into a circular pillar with specified diameter value by compressing and stretching simultaneously;
processing a hinge hole: making a hole at the head end of the axis.

18. The manufacturing method of resilient hinge of spectacle frame according to claim 17,
wherein the axis having a primary shape is cut out from a metal sheet in the primary shaping step.

19. The manufacturing method of resilient hinge of spectacle frame according to claim 18,
wherein the axis having a primary shape is cut out from a metal sheet with an NC EDM wire-cut machine in the primary shaping step.

20. The manufacturing method of resilient hinge of spectacle frame according to claim 19,
wherein it also includes a step through which an ordinary metal sheet is manufactured into one that meets the specifications required by an NC EDM wire-cut machine.

21. The manufacturing method of resilient hinge of spectacle frame according to claim 17,
wherein it also includes a step of shaping the middle pillar of the axis.

22. The manufacturing method of resilient hinge of spectacle frame according to claim 21,
wherein the middle pillar of said axis is shaped by pressing or cutting or by other commonly known shaping method.

23. The manufacturing method of resilient hinge of spectacle frame according to claim 17,
wherein in the step of the diameter-reducing, the rear portion of the axis having a primary shape is compressed and stretched into a circular pillar with a specified diameter by using a diameter-reducing machine.

24. The manufacturing method of resilient hinge of spectacle frame according to claim 17,
wherein said method includes a step in which the unwanted excess portion of the rear circular pillar of the axis that was produced by the diameter-reducing process can be cut out.

25. The manufacturing method of resilient hinge of spectacle frame according to claim 17,
wherein a hinge hole in the male hinge structure of the head of the axis is drilled out, punched or milled by a drilling machine, punching machine or milling machine in the hinge hole processing step.

26. The manufacturing method of resilient hinge of spectacle frame according to claim 17,
wherein the axis is manufactured from materials like titanium, titanium alloy, copper, copper alloy, stainless steel, or other metallic materials like iron of ferroalloy, etc.

27. The manufacturing method of resilient hinge of spectacle frame according to claim 17,
wherein it also includes a step of fitting the positioning guide, resilient medium and stopper over the middle pillar through to the rear pillar in same order and fixing their positions.
